# FASCICULE DE BREVET EUROPEEN

(11) **EP 0 793 778 B1**
(45) Date de publication et mention de la délivrance du brevet: **24.07.2002**
(21) Numéro de dépôt: 95940180.3
(22) Date de dépôt: 15.11.1995
(51) Int. Cl.: F02P 5/152

(54) **PROCEDE DE RETOUR A L'AVANCE NOMINALE, EN L'ABSENCE DE DETECTION DE CLIQUETIS**
VERFAHREN ZUR RÜCKKEHR ZUR NENNZÜNDVERSTELLUNG IN ABWESENHEIT EINER KLOPFERKENNUNG
PROCESS FOR RETURNING TO THE NOMINAL ADVANCE IN THE ABSENCE OF PINKING

(30) Priorité: 23.11.1994 FR 9414125
(43) Date de publication de la demande: 10.09.1997
(73) Titulaire: Siemens VDO Automotive S.A.S., 31036 Toulouse cedex 01 (FR)
(72) Inventeur: ROUPHAEL, Roger, F-31240 L'Union (FR)
(74) Mandataire: Berg, Peter
(86) Numéro de dépôt international: EP9504497
(87) Numéro de publication internationale: WO9616269

(56) Documents cités:
- EP-A- 0 087 162
- DE-A- 3 414 976
- GB-A- 2 193 255
- PATENT ABSTRACTS OF JAPAN vol. 008 no. 146 (M-307) ,7 Juillet 1984 & JP,A,59 041666 (TOYOTA JIDOSHA KK) 7 Mars 1984,
- PATENT ABSTRACTS OF JAPAN vol. 005 no. 143 (M-087) ,9 Septembre 1981 & JP,A,56 075965 (HITACHI LTD) 23 Juin 1981,

## Description

La présente invention concerne un procédé de retour à l'avance nominale en cas d'absence de détection de cliquetis.

Le phénomène dit "de cliquetis" est bien connu. Il s'agit de l'auto inflammation du mélange air / carburant, dans le cylindre d'un moteur à combustion interne, avant que l'étincelle d'allumage ne soit produite. Cette combustion anormale du mélange engendre des ondes de fortes pression et un bruit acoustique appelé "cliquetis". Lorsque le cliquetis est intense, il peut en résulter des dégradations importantes du moteur comme par exemple:
- une érosion de la culasse et des pistons,
- des cassures des cordons de piston et de segments et,
- une rupture du joint de culasse ou une détérioration des soupapes.

Pour supprimer ce phénomène de cliquetis, il est connu d'agir notamment sur l'avance à l'allumage. En effectuant des retraits de l'avance à l'allumage on provoque un allumage anticipé des bougies. De ce fait la combustion du mélange air / carburant a lieu un peu plus tôt dans le cycle de combustion. Si cette combustion est réalisée suffisamment tôt le cliquetis ne peut plus se produire.

Le brevet FR 2 689 183 (Siemens Automotive S.A) concerne un procédé de retrait de l'avance à l'allumage. Dans ce brevet la loi de retrait de l'avance à l'allumage tient compte non seulement de l'intensité du cliquetis mesuré mais aussi, de l'historique de ce cliquetis pour un cylindre donné. En outre, le procédé selon ce brevet utilise la logique floue pour le calcul du retrait à appliquer. Un tel procédé permet de ne pas appliquer un retrait forfaitaire (pénalisant pour le couple moteur), mais un retrait proportionnel à l'intensité du cliquetis détecté.

Bien sûr lorsque le retrait d'avance à l'allumage a permis de supprimer le cliquetis il convient ensuite de replacer l'allumage à l'avance nominale.

Les stratégies de retour à l'avance nominale, comme le montre par exemple le document EP 0 087 162, préconisent que le retour se fasse d'une manière régulière et lente quelle que soit l'importance du cliquetis corrigé. Or tant qu'un moteur ne fonctionne pas à l'avance nominale il ne présente pas son couple optimal. En outre, les fortes corrections d'avance sont préjudiciables à la stabilité du moteur.

Le but de la présente invention est donc de rechercher un procédé de retour à l'avance nominale, permettant au moteur de travailler le plus rapidement possible dans ses conditions optimales, sans toutefois générer un nouveau cliquetis.

A cet effet la présente invention concerne un procédé de retour à l'avance nominale, le dit procédé étant destiné à être mis en oeuvre dans le cadre d'une stratégie de commande électronique d'un moteur à combustion interne, lorsqu'un phénomène de cliquetis a été détecté et qu'un procédé de retrait de l'avance à l'allumage a entraîné la disparition du cliquetis, le dit procédé selon l'invention étant caractérisé en ce qu'il consiste à:
- compter le nombre de détections de cliquetis ayant eut lieu pendant un nombre déterminé de cycles de combustion, en éliminant les fausses détections de cliquetis dues à des variations de régime et ou de pression d'admission d'air,
- déterminer pour chacune des détections comptabilisée qu'elle était le niveau d'énergie du cliquetis et calculer le niveau d'énergie moyen correspondant au nombre de détections comptabilisé,
- pondérer le nombre de détections par le niveau d'énergie moyen,
- et, comparer le nombre de détections pondéré avec un ensemble de seuils prédéterminés par expérimentation pour en déduire la loi de retour optimale à l'avance nominale.

Ainsi le procédé selon l'invention permet de tenir compte de l'intensité du cliquetis précédemment corrigé mais aussi mémorise l'historique de ce cliquetis, pour en déduire la loi optimale de retour à l'avance nominale.

Avantageusement le nombre de détections de cliquetis est enregistré par un simple compteur et la détermination de la loi de retour à suivre est effectuée par simple comparaison d'un nombre de détections pondéré et d'un ensemble de seuils prédéterminés par expérimentation.

Selon un mode préférentiel de réalisation de l'invention on ne tient compte que des détections de cliquetis effectuées sur les quatre derniers cycles de combustion.

Avantageusement seules les "bonnes détections" de cliquetis sont prises en compte. En effet on élimine tous "faux cliquetis" dus notamment à une variation du régime moteur, ou à une variation de la pression d'admission en air.

D'autres objets, caractéristiques et avantages seront mieux compris à la lecture de la description qui suit, à titre d'exemple non limitatif, et en référence aux dessins annexés dans lesquels:
- La figure 1 est un diagramme fonctionnel illustrant un procédé classique de correction de l'avance nominale,
- La figure 2a illustre une correction de l'avance à l'allumage (courbe a) suivi d'un retour à l'avance nominale de type classique (courbe b), et d'un retour à l'avance nominale selon la présente invention (courbe c),
- La figure 2b montre en correspondance avec la figure 2a la forme du signal capté par l'accéléromètre pendant la fenêtre de cliquetis,
- La figure 3 est un schéma fonctionnel représentant les différentes étapes du procédé selon l'invention,
- La figure 4a est une vue schématique illustrant le procédé de retour à l'avance nominale selon l'invention, et
- La figure 4b est une vue schématique montrant, en correspondance avec la figure 4a, le signal de sortie du capteur de cliquetis.

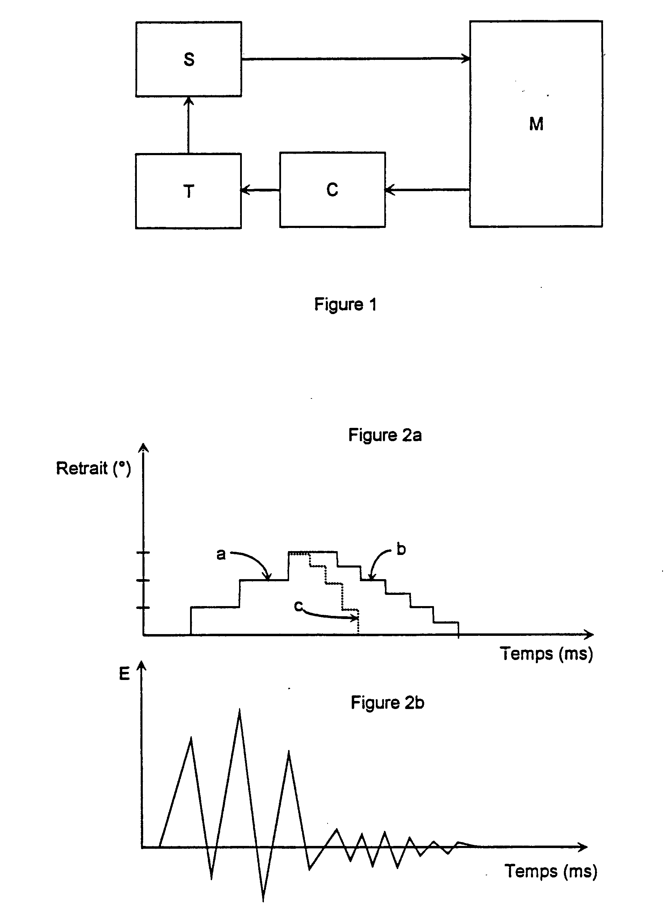

Comme le montre la figure 1 un dispositif classique de retrait de lavance à l'allumage comporte un capteur de cliquetis C, du type accéléromêtre par exemple, fixé sur un moteur M. Ce capteur est sensible au cliquetis apparaissant dans chaque cylindre du moteur et délivre un signal vers un étage de traitement du signal T. Le signal traité est ensuite délivré à des moyens de calcul S de la stratégie de correction de l'avance à l'allumage. Ces moyens corrigent (courbe a, figure 2a) en fonction du retrait calculé, l'instant d'allumage de la ou des) bougie(s) placée(s) dans le(s) cylindre(s) où l'on a détecté du cliquetis. Lorsque le cliquetis a disparu les moyens de calcul S autorisent un retour de l'avance à l'allumage à sa valeur nominale (courbe b, figure 2a).

Ce retour est, par exemple, effectué de manière continu à raison d'un rapprochement de 1°, toutes les 2,5 secondes environ. D'autres corrections, toujours de type linéaires peuvent être prévues pour adapter l'allumage à l'encrassement et au vieillissement du moteur, à la perte d'efficacité du circuit de refroidissement, et / ou à la qualité du carburant.

La figure 2b montre en correspondance avec les corrections de l'avance à l'allumage, les pics d'intensité de l'énergie de cliquetis.

Selon la présente invention pour permettre un fonctionnement optimal du moteur c'est à dire pour lui permettre de travailler le plus possible à l'avance nominale, on suit une loi de retour à l'avance nominale non linéaire (courbe c figure 2a).

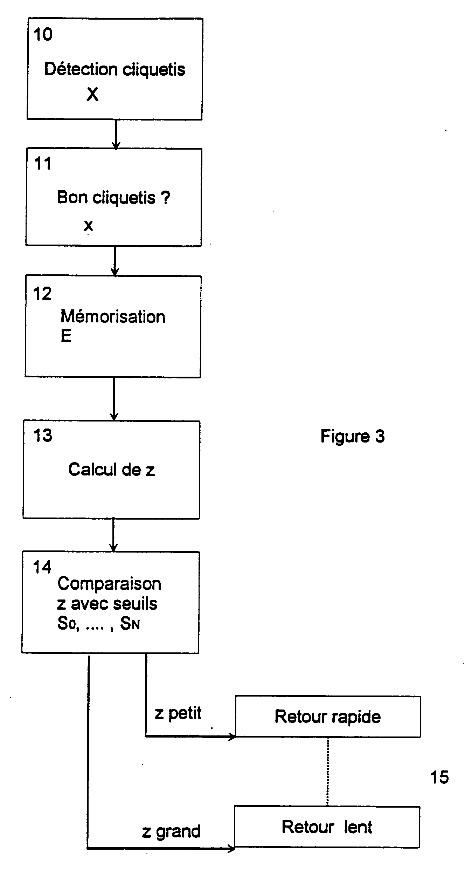

A cet effet, (figure 3) lorsque, suite à un retrait de l'avance nominale on ne détecte plus de cliquetis on procède de la manière suivante:
- **Etape 10**, on compte le nombre X de détections de cliquetis faites avant cette non détection. De manière préférentielle on se limite aux quatre derniers cycles de combustion. Donc dans le pire des cas on trouve quatre détections de cliquetis dans le meilleur zéro.
- **Etape 11**, on vérifie que les X détections comptées sont bien de "bonnes" détections. Pour ce faire on élimine toute détection qui serait due à une variation de régime moteur, ou toute détection qui serait due à une variation de la pression d'admission en air. Pour éliminer ces "mauvaises" détections on tient compte d'une cartographie réalisée sur le moteur type en fonction du régime moteur et de la pression d'admission. Cette cartographie met en évidence en fonction du régime moteur et de la pression d'admission les zones d'apparition du "faux cliquetis". On appelle x le nombre de bonnes détections de cliquetis.
- **Etape 12**, pour chaque bonne détection de cliquetis x, on mémorise la valeur de l'énergie E du cliquetis détecté.
- **Etape 13,** on pondère sur quatre cycles de combustion le nombre de bonnes détections x par l'énergie moyenne E du cliquetis. Soit z ce nombre pondéré.
- **Etape 14,** on compare ce nombre de détections pondéré z, avec une pluralité de seuils (S₀ à Sₙ) déterminés par expérimentation. Plus le nombre de détection pondéré z est élevé et plus le cliquetis doit être considéré comme fort.
- **Etape 15,** on établit la loi de retour à l'avance nominale en fonction, de la valeur du nombre de détection pondéré z. Lorsque le cliquetis est considéré comme fort on provoque un retour lent à l'avance nominale, au contraire lorsque le cliquetis est considéré comme faible, on provoque un retour rapide à l'avance nominale. Bien entendu à toute graduation intermédiaire (cliquetis naissant, moyen, très fort...) correspond une loi de retour à l'avance nominale spécifique.

On notera que grâce à un tel procédé on tient compte non seulement de l'intensité du cliquetis corrigé (puisque l'on tient compte de l'énergie E de ce cliquetis (étape 12)), mais aussi de son historique (étape 11) pour déterminer le type de retour à l'avance nominale, à appliquer. Cet historique permet de donner au procédé selon l'invention un effet mémoire (dans l'exemple représenté cet effet mémoire s'applique aux quatre dernières détections de cliquetis).

Selon l'invention la loi de retour à l'avance nominale dépend du nombre de fois où le cliquetis a été détecté, et de l'intensité de ce cliquetis. De ce fait il est possible en jouant sur un compteur mémorisant le nombre de bonnes détections x de modifier la loi de retour à l'avance nominale. Ainsi lorsque l'énergie moyenne du cliquetis diminue il est possible d'accélérer le retour à l'avance nominale en décrémentant artificiellement le compteur de mémorisation du nombre de détections. De ce fait on obtient une loi de retour suivant la courbe c (figure 2a). cette décrémentation n'est autorisée qu'à partir du moment ou l'avance est revenue de 1°.

Grâce à une telle décrémentation on crée artificiellement un retour plus rapide vers les conditions optimales de fonctionnement.

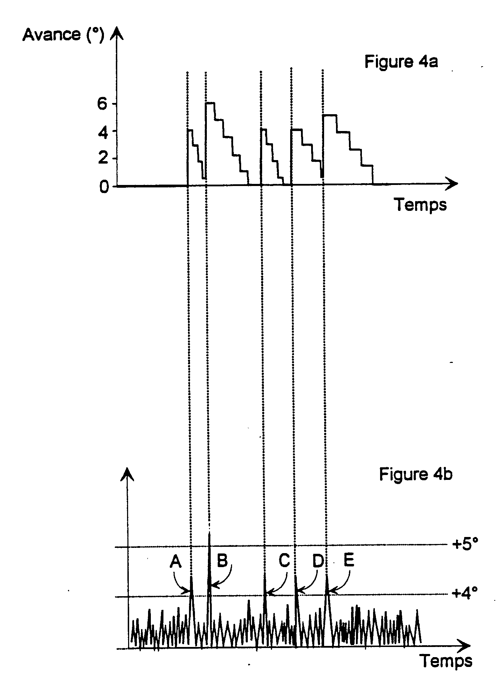

La figure 4b montre un signal en provenance d'un capteur de cliquetis de type classique. On remarque sur cette figure que cinq pics de cliquetis A, B, C, D, E sont détectés. Ces pics correspondent à un "bon cliquetis".

On remarque que le pic A provoque un retrait d'avance à l'allumage moyen (de l'ordre de 4°). La loi de retour à l'avance nominale suivant ce retrait est rapide, car aucun pic de cliquetis n'a été détecté auparavant et car l'intensité du pic A est moyenne.

Le deuxième pic détecté B présente quant à lui une forte intensité, il provoque donc un fort retrait. Comme il est déjà précédé d'un pic de cliquetis et que l'intensité du pic B est importante, il provoque un retour lent à la valeur nominale. Ce retour à la valeur nominale est complet puisqu'aucun pic de cliquetis n'est détecté immédiatement après celui-ci. Le moteur peut donc fonctionner pendant un petit moment à sa valeur nominale.

Les troisième, quatrième et cinquième pics C, D, E se suivent les uns les autres a peu d'intervalle de temps, et sont d'intensité moyenne. Le procédé selon l'invention permet d'établir suite aux retraits provoqués par chacun de ces pics des lois de retour à la valeur nominale adaptée à chacun de ces pics.

En effet la loi de retour à l'avance nominale pour le pic C est une loi rapide car le pic C n'est pas immédiatement précédé d'un autre pic de détection et car l'intensité du cliquetis détecté est moyenne.

Le pic D, bien qu'il présente une intensité similaire à celle du pic C, est immédiatement précédé du pic C. Dans ce cas, la loi de retour à l'avance nominale est un peu moins rapide que celle suivant le pic C. Ceci est normal puisque la loi de retour à l'avance nominale tient compte non seulement de l'intensité du pic de cliquetis détecté, mais aussi du nombre de bons cliquetis précédemment détectés. Dans l'exemple représenté on se limite aux quatre derniers cycles de combustion.

Le pic E quant à lui génère une loi de retour à l'avance normale très lente, non pas à cause de l'intensité du cliquetis détecté (cette intensité est en effet similaire à celle des deux pics C et D,), mais en raison du fait qu'il est immédiatement précédé de deux bonnes détection de cliquetis. La loi de retour à l'avance nominale est ici due à l'effet mémoire pris en compte par le procédé selon l'invention.

L'exemple illustré aux figures 4a et 4b montre que les lois de retour à l'avance nominale générées à partir du procédé selon l'invention tiennent compte non seulement de l'intensité de tout "bon cliquetis" détecté mais aussi de l'historique (effet mémoire) du cliquetis détecté. De ce fait le moteur tourne à l'avance nominale, plus souvent que dans les procédés de retour classiques appliquant systématiquement un retour lent à l'avance nominale. Ainsi le procédé selon l'invention, permet d'améliorer les performances du moteur.

Il est possible de tenir compte d'autres paramètres que la pression d'admission en air et le régime moteur pour déterminer si une détection de cliquetis doit être considérée comme bonne ou non. De même, le nombre de détection de cliquetis peut être établi sur un nombre quelconque de cycles de combustion et non pas uniquement quatre, comme précédemment décrit.

## Revendications

1. Procédé de retour à l'avance nominale, le dit procédé étant destiné à être mis en oeuvre dans le cadre d'une stratégie de commande électronique d'un moteur (M) à combustion interne, lorsqu'un phénomène de cliquetis a été détecté et qu'un procédé de retrait de l'avance à l'allumage a entraîné la disparition du cliquetis, le dit procédé selon l'invention étant **caractérisé en ce qu'**il consiste à:
- compter le nombre (x) de détections de cliquetis ayant eut lieu pendant un nombre déterminé de cycles de combustion, en éliminant les fausses détections de cliquetis,
- déterminer pour chacune des détections comptabilisée qu'elle était le niveau d'énergie (E) du cliquetis et calculer le niveau d'énergie moyen correspondant au nombre de détections comptabilisé,
- pondérer le nombre de détections par le niveau d'énergie moyen,
- et, comparer le nombre de détections pondéré (z) avec un ensemble de seuils (S₀ à Sₙ) prédéterminés par expérimentation pour en déduire une loi de retour à l'avance nominale.

2. Procédé de retour à l'avance nominale selon la revendication 1, **caractérisé en ce que** le retour à l'avance nominale est d'autant plus rapide que le nombre de détections pondéré (z) est faible.

3. Procédé de retour à l'avance nominale selon la revendication 1 ou 2, **caractérisé en ce qu'**on utilise un moyen de mémorisation des corrections de l'avance nominale lors des cycles précédents pour mémoriser l'énergie de chaque cliquetis détecté.

4. Procédé de retour à l'avance nominale selon la revendication 3, **caractérisé en ce que** la mémorisation est effectuée sur les quatre cycles précédents celui en cours.

5. Procédé de retour à l'avance nominale selon la revendication 4, **caractérisé en ce qu'**à chaque fois qu'une correction de l'avance est réalisée un compteur du nombre de détection (x) est incrémenté d'une unité, alors que lorsqu'aucune correction de l'avance n'est réalisée le compteur est décrémenté d'une unité.

6. Procédé selon la revendication 5, **caractérisé en ce que** lorsque l'énergie moyenne diminue et lorsque l'avance est revenue d'au moins 1°, on décrémente artificiellement d'une unité le dit compteur.

## Patentansprüche

1. Verfahren zum Zurückkehren zum nominalen Zündvorsteuerwinkel, welches Verfahren im Rahmen einer elektronischen Steuerstrategie einer Brennkraftmaschine (M) durchzuführen ist, wenn ein Klopfen erkannt wurde und ein Verfahren zum Spätverstellen des Zündvorsteuerwinkels das Klopfen verschwinden ließ, wobei dieses Verfahren gemäß der Erfindung **dadurch gekennzeichnet ist, dass** es besteht aus:
- Zählen der Anzahl (x) der Klopferkennungen, die während einer vorgegebenen Anzahl von Verbrennungszyklen stattgefunden haben, wobei die fehlerhaften Klopferkennungen eliminiert werden,
- Bestimmen der Klopfintensität (E) für jede der registrierten Klopferkennungen und Berechnen der mittleren Klopfintensität entsprechend der registrierten Anzahl der Klopferkennungen,
- Gewichten der Anzahl der Klopferkennungen für die mittlere Klopfintensität,
- und Vergleichen der gewichteten Anzahl der Klopferkennungen (z) mit einer Gruppe von experimentell vorbestimmten Schwellen (Sₒ - Sₙ), um hieraus ein Gesetz für die Rückkehr zum nominalen Zündvorsteuerwinkel abzuleiten.

2. Verfahren zum Zurückkehren zum nominalen Zündvorsteuerwinkel gemäß Anspruch 1, **dadurch gekennzeichnet, dass** die Rückkehr zum nominalen Zündvorsteuerwinkel umso rascher erfolgt, je kleiner die gewichtete Anzahl der Zünderkennungen (z) ist.

3. Verfahren zum Zurückkehren zum nominalen Zündvorsteuerwinkel gemäß Anspruch 1 oder 2, **dadurch gekennzeichnet, dass** ein Mittel zum Speichern der Korrekturen des nominalen Zündvorsteuerwinkels während vorhergehender Zyklen verwendet wird, um die Energie jedes erkannten Klopfvorganges zu speichern.

4. Verfahren zum Zurückkehren zum nominalen Zündvorsteuerwinkel nach Anspruch 3, **dadurch gekennzeichnet, dass** die Speicherung über die vier Zyklen erfolgt, die dem laufenden Zyklus vorangegangen sind.

5. Verfahren zum Zurückkehren zum nominalen Zündvorsteuerwinkel nach Anspruch 4, **dadurch gekennzeichnet, dass** jedes Mal, wenn eine Korrektur des Zündvorsteuerwinkels erfolgt ist ein Zähler für die Anzahl der Zünderkennungen (x) inkrementweise um eine Einheit weitergeschaltet wird, während der Zähler inkrementweise um eine Einheit zurückgeschaltet wird, wenn keine Korrektur des Vorsteuerzündwinkels erfolgt ist.

6. Verfahren nach Anspruch 5, **dadurch gekennzeichnet, dass**, wenn die mittlere Energie kleiner wird und wenn der Zündvorsteuerwinkel um mindestens 1° zurückverstellt wurde, der Zähler künstlich um eine Einheit inkrementweise zurückverstellt wird.

## Claims

1. Method of returning to nominal advance, this method being intended to be implemented in the context of an electronic control strategy for an internal combustion engine (M) when an episode of piston knock has been detected and a method of retarding the ignition advance has caused the piston knock to disappear, the said method according to the invention being **characterised in that** it consists of:
- counting the number (x) of occurrences of piston knock detected during a specified number of combustion cycles, at the same time excluding falsely detected occurrences of piston knock,
- determining the energy level (E) of the piston knock for each of the accepted occurrences detected and calculating the average energy level for the number of accepted occurrences detected,
- weighting the number of detected occurrences by the average energy level,
- and comparing the weighted number (z) of detected occurrences with a set of thresholds (S₀ to Sₙ) which have been predetermined by experiment in order to derive a law for returning to nominal advance.

2. Method of returning to nominal advance according to Claim 1, **characterised in that** the return to nominal advance is faster, the lower the weighted number (z) of detected occurrences.

3. Method of returning to nominal advance according to Claims 1 or 2, **characterised in that** a means is used to memorise the corrections made to nominal advance during preceding cycles so as to memorise the energy of each piston knock detected.

4. Method of returning to nominal advance according to Claim 3, **characterised in that** memorisation is carried out over the four cycles preceding the current cycle.

5. Method of returning to nominal advance according to Claim 4, **characterised in that** each time a correction is made to the advance, a detection number (x) counter is incremented by one unit, and when no correction is made to the advance the counter is decremented by one unit.

6. Method according to Claim 5, **characterised in that** when the average energy falls and the advance has returned by at least 1°, the said counter is decremented by one unit.
